Europäisches Patentamt

European Patent Office

Office européen des brevets

(19)

(11) Numéro de publication : **0 461 980 A1**

# (12) DEMANDE DE BREVET EUROPEEN

(21) Numéro de dépôt : **91401521.9**

(22) Date de dépôt : **10.06.91**

(51) Int. Cl.⁵ : **C04B 35/52, B29C 53/82**

(30) Priorité : 13.06.90 FR 9007319

(43) Date de publication de la demande :
18.12.91 Bulletin 91/51

(84) Etats contractants désignés :
AT BE CH DE DK ES GB IT LI NL SE

(71) Demandeur : AEROSPATIALE SOCIETE
NATIONALE INDUSTRIELLE Société
Anonyme dite:
37, Boulevard de Montmorency
F-75016 Paris (FR)

(72) Inventeur : Pastureau, Nicole
3 rue du Canter
F-33320 Eysines (FR)
Inventeur : Dourthe, Patrice
"Collège" de Rion des Landes
F-40370 Rion des Landes (FR)

(74) Mandataire : Bonnetat, Christian
CABINET BONNETAT 23, Rue de Léningrad
F-75008 Paris (FR)

(54) **Mandrin pour la fabrication de corps creux en matériau composite et fabrication de tels corps creux à l'aide dudit mandrin.**

(57) — Mandrin pour la fabrication d'un corps creux en matériau composite.

— Selon l'invention, ledit mandrin est constitué par un bloc homogène de feutre de graphite dont les fibres sont noyées dans une matrice de carbone de pyrolyse. La densification de l'agencement de fibres destiné à former ledit corps creux est réalisé sous atmosphère neutre.

EP 0 461 980 A1

La présente invention se rapporte à la fabrication des corps creux en matériau composite.

Quoique non exclusivement, elle est particulièrement appropriée à la fabrication de corps creux en matériau composite tridimensionnel selon un procédé dans lequel, dans un mandrin de support dont la surface extérieure correspond à la surface intérieure dudit corps creux, on plante des organes rigides au moins sensiblement orthogonaux à ladite surface extérieure, puis on applique sur la surface extérieure dudit mandrin des nappes successives de fibres (verre, carbone, bore, etc...) superposées et croisées et on durcit l'agencement desdites fibres à l'aide d'un liant durcissable, qui forme matrice et qui peut être introduit dans ledit agencement de fibres soit par imprégnation desdites fibres préalablement à leur application sur le mandrin, soit de préférence par imprégnation dudit agencement de fibres après réalisation de celui-ci (par exemple par dépôt en phase vapeur dudit liant), après quoi on dégage dudit mandrin le corps creux ainsi obtenu. L'invention concerne plus particulièrement un procédé pour la réalisation d'un mandrin pour la mise en oeuvre du procédé de fabrication de corps creux décrit ci-dessus, ainsi qu'un mandrin destiné à la fabrication de corps creux composites.

Un tel procédé de fabrication de corps creux est par exemple décrit par le brevet américain US-A-3 577 294.

Dans ce brevet américain, lesdits organes rigides sont constitués eux-mêmes de fibres destinées à rester prisonnières dudit agencement de nappes pour former l'une des trois dimensions des corps creux. Afin de permettre de planter de tels organes rigides, le mandrin utilisé est réalisé superficiellement en une matière, telle qu'une mousse, dans laquelle lesdits organes rigides peuvent tout d'abord facilement pénétrer, puis être retenus. Par ailleurs, afin d'obtenir des corps creux de forme aussi précise que possible, le durcissement dudit liant durcissable est réalisé alors que ledit agencement de fibres est supporté par ledit mandrin, celui-ci assurant la stabilité dudit agencement pendant son durcissement. Ainsi, l'extraction du mandrin n'est réalisée qu'après durcissement des fibres. Pour permettre l'extraction du mandrin hors du corps creux durci, le brevet US-A-3 577 294 prévoit que le mandrin utilisé est partiellement thermiquement destructible.

Le fait que le durcissement de l'agencement des fibres doive être effectué avant extraction du mandrin présente un inconvénient important. En effet, ce durcissement ne peut être effectué à température élevée, car, sinon, la matière mousse maintenant lesdits organes rigides et/ou la partie thermiquement destructible dudit mandrin seraient détruites lors du durcissement dudit agencement des fibres, de sorte que le mandrin ne pourrait plus assurer le maintien de cet agencement. Or, on sait que les opérations de durcissement peuvent nécessiter l'usage de températures élevées (par exemple supérieures à 150°C) pour la polymérisation de certaines résines pouvant être utilisées comme liant durcissable. On sait de plus, comme cela est mentionné ci-après, que, pour obtenir des propriétés mécaniques élevées pour le corps creux obtenu de cette façon, il est souvent nécessaire de mettre en oeuvre des opérations de densification nécessitant des traitements à température encore plus élevée.

Dans le brevet français FR-A-2 587 375 est décrit un mandrin supportant en continu une température d'environ 1650°C et pouvant supporter temporairement une température proche de 2000°C. Ce mandrin est à cet effet réalisé superficiellement en un feutre constitué de fibres de silice et d'un liant minéral constitué par exemple d'un mélange de silicates. Ledit mandrin est obtenu par fixation par collage dudit feutre de silice sur un support interne, par exemple en ciment ou en métal, et par cuisson dudit feutre à 80°C pendant au moins 48 heures pour le rigidifier grâce au durcissement du liant minéral. La forme du mandrin est obtenue, soit par conformage ou moulage sous pression dudit feutre (vraisemblablement avant cuisson), soit par usinage dudit feutre après cuisson.

On remarquera tout d'abord que la structure d'un tel mandrin est hétérogène (revêtement superficiel de feutre collé sur un support en une autre matière), de sorte que le manque d'homogénéité dudit mandrin soulève des difficultés lorsque celui-ci est soumis à des températures élevées.

Par ailleurs, les performances de résistance à la température avancées pour un tel mandrin de feutre de silice paraissent justifiées, puisque la silice fond à environ 1600°C. Cependant, dans ce brevet antérieur, il est indiqué, sans autre précision particulière, qu'il est possible de réaliser ledit mandrin en un feutre constitué d'une matière minérale autre que la silice, comme par exemple le carbone.

Toutefois, puisque le carbone se consume à environ 400°C, on doit en déduire que les performances de résistance à la température d'un tel mandrin réalisé en un feutre de carbone sont très inférieures à celles du mandrin en feutre de silice. De plus, ce brevet antérieur n'indique pas de méthode spécifique de rigidification du feutre de carbone, de sorte que l'on doit en déduire que ce durcissement est également obtenu grâce à un liant minéral du type utilisé pour le mandrin en feutre de silice, ce qui accroît encore le manque d'homogénéité du mandrin.

Cependant, il est intéressant de pouvoir disposer d'un mandrin en feutre de carbone homogène pour réaliser des corps creux composites soumis à des opérations de densification à température élevée, car le feutre de carbone est moins cher que le feutre de silice.

Aussi, l'un des objets de la présente invention est-il de permettre d'obtenir un mandrin homogène en feutre de carbone.

A cette fin, selon l'invention, le procédé pour la réalisation d'un mandrin destiné à la fabrication d'un corps creux en matériau composite, selon un procédé de fabrication dans lequel on applique sur ledit mandrin un agencement de fibres, puis on durcit et on densifie ledit agencement de fibres par des opérations nécessitant l'application de températures élevées, après quoi on dégage dudit mandrin le corps creux formé par ledit agencement de fibres, durci et densifié, ledit mandrin étant réalisé à l'aide d'un feutre de graphite que l'on rigidifie et que l'on usine de façon à ce que sa surface extérieure corresponde à la surface intérieure dudit corps creux, est remarquable en ce qu'on rigidifie un bloc de feutre de graphite par imprégnation par un produit polymérisable générateur de carbone, puis on soumet ledit bloc de feutre de graphite à une température élevée sous atmosphère neutre afin de pyrolyser ledit produit polymérisable, après quoi on usine ledit bloc rigidifié à la forme désirée pour le mandrin.

Ainsi, l'utilisation d'un bloc de feutre de graphite permet de se dispenser d'un support interne de nature différente dudit feutre. De plus, la pyrolyse dudit produit polymérisable engendre la formation d'une matrice de carbone enrobant les fibres de graphite dudit feutre. On obtient donc un mandrin en matériau carbone/carbone. On remarquera que, grâce au fait que l'on opère sous atmosphère neutre, le bloc de feutre de graphite supporte sans dommage la température élevée de la pyrolyse (par exemple de l'ordre de 850°C).

Par la mise en oeuvre de l'invention, on obtient donc un mandrin constitué par un matériau carbone/carbone (donc homogène en ce qui concerne sa matière constitutive), qui :

. permet l'implantation superficielle desdits organes rigides et le maintien de ceux-ci pendant l'application des nappes superposées croisées ;

. résiste à des températures élevées, de l'ordre de 400°C en atmosphère oxydante ; et

. présente une résistance mécanique suffisante pour supporter sans déformation les efforts appliqués par lesdites nappes superposées (principalement celles qui correspondent à des enroulements circonférentiels) au cours de leur application.

De préférence, la masse spécifique du feutre rigidifié est au moins égale à 0,2 g/cm3.

Un tel mandrin peut être plein ou creux. Il peut présenter une forme de révolution pour permettre l'application des nappes superposées croisées par bobinage de filaments.

On sait que, dans le commerce, le feutre de carbone se présente généralement sous la forme de plaques (éventuellement circulaires) et non pas sous la forme de blocs. Aussi, selon une forme de mise en oeuvre du procédé selon l'invention, on part de plaques de feutre que l'on assemble pour obtenir ledit bloc. Afin que lesdites plaques présentent une résistance mécanique satisfaisante pendant leur assemblage, il est avantageux de procéder à l'imprégnation desdites plaques par le produit polymérisable avant leur assemblage, la pyrolyse dudit produit étant réalisé après assemblage desdites plaques. Ainsi, pendant leur assemblage, lesdites plaques sont au moins partiellement rigidifiées par ledit produit générateur de carbone polymérisé.

De préférence, l'assemblage desdites plaques est obtenu par collage au moyen d'un produit également générateur de carbone. Ce produit de collage peut être de la même nature que le produit d'imprégnation du feutre, par exemple une résine phénolique. Le produit de collage est avantageusement chargé par de la poudre de carbone. Ainsi, le mandrin obtenu n'est constitué que de carbone.

Dans le cas où le procédé d'application de l'agencement de fibres met en oeuvre non seulement des organes rigides fixes, tels que des picots (comme cela est le cas du brevet US-A-3 577 294), mais encore un organe rigide mobile, tel qu'une aiguille, destinée à introduire à travers les nappes de fibres reposant sur le mandrin un fil continu formant des boucles successives ouvertes (comme cela est décrit dans le brevet européen EP-A-0 284 497), il peut être avantageux d'améliorer le coefficient de frottement de ladite aiguille, animée d'un mouvement de va et vient, par rapport au mandrin dans lequel elle pénètre.

Aussi, dans un mode de réalisation du mandrin plus particulièrement, quoique non exclusivement, destiné à la mise en oeuvre du procédé décrit dans le brevet européen précité, on prévoit que ledit mandrin, au moins dans sa couche superficielle, est imprégné par un liant caoutchouteux. Avantageusement, l'épaisseur de la couche superficielle du mandrin imprégnée par ledit liant caoutchouteux est au moins égale à la profondeur de la pénétration de ladite aiguille dans ledit mandrin.

Dans ce cas, l'usinage du bloc de feutre rigidifié n'est réalisé que de façon approximative de façon à obtenir une ébauche de mandrin, puis cette ébauche est soumise au moins superficiellement à une imprégnation par un liant caoutchouteux durcissable, après quoi on usine l'ébauche à la forme définitive du mandrin.

Une telle imprégnation peut être réalisée par mise en rotation de l'ébauche dans un réservoir contenant une solution du liant caoutchouteux, l'excédent de liant étant éliminé par exemple par essorage, avant durcissement dudit liant.

Un tel liant peut être du latex de néoprène.

On remarquera que le liant caoutchouteux ne forme pas un simple revêtement superficiel du mandrin ajoutant une surépaisseur à celui-ci, mais au contraire est imprégné en profondeur dans la matière superficielle dudit mandrin.

On voit donc que l'invention concerne de plus un mandrin destiné à la fabrication d'un corps creux en matériau composite, selon un procédé de fabrication dans lequel on applique sur ledit mandrin un agencement de fibres, puis on durcit et on densifie ledit agencement de fibres par des opérations nécessitant l'application de températures élevées, après quoi on dégage dudit mandrin le corps creux formé par ledit agencement de fibres, durci et densifié, ledit mandrin comportant du feutre de graphite rigidifié et usiné de façon à ce que sa surface extérieure corresponde à la surface intérieure dudit corps creux, ce mandrin étant remarquable en ce qu'il est constitué d'un bloc homogène de feutre de graphite dont les fibres sont noyées dans une matrice de carbone de pyrolyse.

Le mandrin conforme à l'invention peut de plus être remarquable en ce qu'au moins sa couche superficielle est imprégnée par un liant caoutchouteux.

Un autre objet de la présente invention est de remédier aux inconvénients décrits ci-dessus, de la technique antérieure apparaissant au moment de la densification de l'agencement de fibres et de permettre de maintenir en place le mandrin dans l'agencement de fibres pendant le durcissement et la densification de celui-ci, même si ces opérations de densification nécessitent la mise en oeuvre de températures élevées, par exemple 2600°C ou plus.

Aussi, selon un autre aspect de la présente invention, le procédé pour la fabrication d'un corps creux en matériau composite, selon lequel :

– on commence par réaliser un mandrin à l'aide d'un feutre de graphite, que l'on rigidifie et que l'on usine de façon à ce que sa surface extérieure corresponde à la surface intérieure dudit corps creux ;
– puis, on applique sur ledit mandrin un agencement de fibres qui est durci et densifié par des opérations nécessitant des températures élevées ;
– après quoi, on dégage dudit mandrin le corps creux formé par ledit agencement de fibres, durci et densifié ; est ramarquable :
– en ce que, pour obtenir ledit mandrin, on rigidifie un bloc de feutre de graphite par imprégnation par un produit polymérisable générateur de carbone, puis on soumet ledit bloc de feutre de graphite à une température élevée sous atmosphère neutre afin de pyrolyser ledit produit polymérisable, après quoi on usine ledit bloc rigidifié à la forme désirée pour le mandrin ;
– et en ce que la densification dudit agencement de fibres est effectuée sous atmosphère neutre.

Puisque la densification est effectuée sous atmosphère neutre, elle peut être réalisée à des températures élevées sans que ledit mandrin perde ses qualités de stabilité dimensionnelle.

Dans une forme de mise en oeuvre avantageuse du procédé selon l'invention, ledit agencement de fibres est constitué de fibres de carbone présentant une grande résistance à la rupture lorsqu'elles sont appliquées sur le mandrin et au moins un traitement de graphitation à au moins 2600°C sous atmosphère neutre est appliqué auxdites fibres supportées par ledit mandrin, après réalisation dudit agencement de fibres sur celui-ci.

Ainsi, la réalisation dudit agencement de fibres sur le mandrin est facilitée puisqu'alors lesdites fibres sont souples, et lesdites fibres ne sont rigidifiées (par l'opération de graphitation) qu'après formation dudit agencement.

Après une telle graphitation, on procède à la densification dudit agencement de fibres par dépôt chimique de carbone en phase vapeur. Ainsi, ce dépôt de carbone forme matrice pour ledit agencement de fibres.

Afin d'obtenir une densification optimale, il est avantageux de procéder, après une première opération de dépôt chimique de carbone en phase vapeur, à une opération d'élévation de température à au moins 2400°C sous atmosphère neutre, puis à une seconde opération de dépôt chimique de carbone en phase vapeur. En effet, cette opération d'élévation de température permet d'ouvrir les pores de l'agencement de fibres, de sorte que le carbone déposé par la seconde opération de dépôt chimique en phase vapeur peut pénétrer profondément à l'intérieur dudit agencement en augmentant la densité de ce dernier.

Eventuellement, pour obtenir la densité désirée, on alterne plusieurs opérations supplémentaires d'élévation de température à au moins 2400°C et plusieurs opérations de dépôt chimique de carbone en phase vapeur.

Les exemples I et II ci-après feront bien comprendre comment on peut réaliser un mandrin conforme à l'invention.

Exemple I

Pour réaliser un mandrin conforme à la présente invention ayant une forme de révolution, on part de disques de feutre de graphite disponibles sur le marché sous la marque déposée SIGRATHERM et fabriqués par la société allemande SIGRI ELEKTROGRAPHIT GmbH. Ces disques portent la référence commerciale PR-201-16 et présentent une masse spécifique de 0,16 g/cm3. Leur épaisseur est de 40 mm et leur teneur en carbone est au moins égale à 99%. Le processus de réalisation du mandrin est alors le suivant :

a) on imprègne ces disques de feutre de graphite par une résine phénolique polymérisable, par exemple celle connue sous la référence commerciale RA 101 fabriquée par la Société française RHONE POULENC, puis on procède à la polymérisation de ladite résine. De la sorte, on obtient des disques de feutres de graphite rigidifiés susceptibles d'être usinés, par exemple par tournage ;

b) après la rigidification des disques de feutre individuels obtenue sous a), ces disques sont empilés et collés pour former un cylindre. De préférence, afin que le collage résiste bien à la température, il est effectué à l'aide de résine chargée de poudre de carbone. Cette résine peut être la même que celle utilisée dans l'opération a). La proportion de poudre de carbone peut être de 3% en masse ;

c) le cylindre de feutre de graphite obtenu à l'issue de l'opération b) est soumis à pyrolyse à 850°C en atmosphère neutre. Grâce à cette pyrolyse, la résine phénolique est transformée en carbone, rigidifiant le feutre de graphite. Après pyrolyse, la masse spécifique du cylindre de feutre de graphite est égale à 0,22 g/cm3. Il résiste à une température de 400°C en atmosphère oxydante. Ses propriétés mécaniques sont les suivantes :

 . contrainte à limite élastique parallèlement aux disques = 0,3 MPa ;
 . contrainte à limite élastique perpendiculairement aux disques = 0,1 MPa ;
 . module d'élasticité parallèlement aux disques = 160 Mpa ;
 . module d'élasticité perpendiculairement aux disques = 7 MPa.

d) le cylindre de feutre de graphite rigidifié obtenu à l'issue de l'opération c) est usiné à la forme définitive désirée par le mandrin.

## Exemple II

On répète les opérations a), b) et c) de l'exemple I et, dans l'opération d'usinage d), au lieu d'usiner le mandrin à sa forme définitive, on réalise une ébauche approximative du mandrin. Ensuite, on procède aux opérations suivantes :

e) l'ébauche de mandrin en feutre de graphite rigidifié est imprégnée au moins superficiellement par un liant caoutchouteux. Ce liant caoutchouteux est par exemple un latex de néoprène, tel que celui connu sous la référence commerciale 115 et fabriqué par la Société américaine E.I. DU PONT DE NEMOURS and Co. L'imprégnation peut être réalisée par mise en rotation de l'ébauche de mandrin dans un réservoir étanche contenant le latex de néoprène dilué à l'eau (75% de latex - 25% eau). L' excédent de latex de néoprène est éliminé par essorage par dépression ;

f) l'ébauche de mandrin imprégnée de latex de néoprène est séchée ;

g) après le séchage de l'opération f), le latex de néoprène est vulcanisé ; et

h) l'ébauche de mandrin imprégnée au moins superficiellement de latex de néoprène vulcanisé est usinée à la forme définitive désirée pour le mandrin.

Ainsi, grâce à l'invention, on obtient des mandrins susceptibles de maintenir les nappes de fibres résistantes superposées et croisées pendant leur durcissement. Dans le cas où le mandrin selon l'invention comporte une imprégnation superficielle caoutchouteuse, il peut se faire que cette imprégnation soit détruite au cours des opérations de durcissement du corps creux. Toutefois, on remarquera que cette destruction est sans conséquence sur le maintien du corps creux par le mandrin avant durcissement complet desdites nappes devant donner lieu au corps creux en matériau tridimensionnel.

L'exemple III ci-après illustre la fabrication d'un corps creux conformément à l'invention.

## Exemple III

Sur le mandrin obtenu par la mise en oeuvre du procédé décrit à l'Exemple II, on dispose un agencement de fibres de carbone à haute résistance à la rupture (c'est-à-dire de grande souplesse) par la mise en oeuvre du procédé décrit dans le brevet européen EP-A-0 284 497 mentionné ci-dessus. La disposition de cet agencement de fibres de carbone sur le mandrin est facilitée par la grande souplesse desdites fibres.

Après réalisation dudit agencement de fibres de carbone, on soumet celui-ci (porté par ledit mandrin) :

i) à un traitement de graphitation en atmosphère neutre, destiné à transformer lesdites fibres de carbone à haute résistance à la rupture en fibres à haut module d'élasticité, c'est-à-dire à grande rigidité. Ce traitement de graphitation peut par exemple comporter les opérations suivantes :
 . i1) montée en température jusqu'à 2600°C en 25 heures ;
 . i2) maintien de la température à 2600°C pendant 1 heure ;
 . i3) descente de la température de 2600°C à la température ambiante, sans contrainte de temps ;

j) puis à un dépôt chimique de carbone en phase vapeur pour augmenter la densité de l'agencement de fibres de graphite. Par exemple, cette opération de dépôt en phase vapeur est réalisée à 1000°C, pendant 50 heures ;

k) ensuite, on procède à une nouvelle élévation de température en atmosphère neutre à 2600°C, afin de parfaire la graphitation des fibres de carbone et d'ouvrir les porosités de l'agencement de fibres en cours de densification ;

l) enfin, on effectue un nouveau dépôt chimique de carbone en phase vapeur à 1000°C, pendant une cinquantaine d'heures.

## Revendications

**1** - Procédé pour la réalisation d'un mandrin destiné à la fabrication d'un corps creux en matériau composite, selon un procédé de fabrication dans lequel on applique sur ledit mandrin un agencement de fibres, puis on durcit et on densifie ledit agencement de fibres par des opérations nécessitant l'application de températures élevées, après quoi on dégage dudit mandrin le corps creux formé par ledit agencement de fibres, durci et densifié, ledit mandrin étant réalisé à l'aide d'un feutre de graphite que l'on rigidifie et que l'on usine de façon à ce que sa surface extérieure corresponde à la surface intérieure dudit corps creux,
caractérisé en ce qu'on rigidifie un bloc de feutre de graphite par imprégnation par un produit polymérisable générateur de carbone, puis on soumet ledit bloc de feutre de graphite à une température élevée sous atmosphère neutre afin de pyrolyser ledit produit polymérisable, après quoi on usine ledit bloc rigidifié à la forme désirée pour le mandrin.

**2** - Procédé selon la revendication 1,
caractérisé en ce que la masse spécifique dudit feutre rigidifié est au moins égale à 0,2 g/cm3.

**3** - Procédé selon l'une des revendications 1 ou 2,
caractérisé en ce que l'on part de plaques de feutre que l'on assemble pour obtenir ledit bloc.

**4** - Procédé selon la revendication 3,
caractérisé en ce qu'on procède à l'imprégnation desdites plaques par le produit polymérisable avant leur assemblage, la pyrolyse dudit produit étant réalisée après assemblage desdites plaques.

**5** - Procédé selon l'une des revendications 3 ou 4,
caractérisé en ce que l'assemblage desdites plaques est obtenu par collage au moyen d'un produit générateur de carbone.

**6** - Procédé selon la revendication 5,
caractérisé en ce que ledit produit de collage est de même nature que le produit d'imprégnation du feutre.

**7** - Procédé selon la revendication 6,
caractérisé en ce que ledit produit de collage est chargé de poudre de carbone.

**8** - Procédé selon l'une quelconque des revendications 1 à 7,
caractérisé en ce qu'au moins la couche superficielle dudit mandrin est imprégnée par un liant caoutchouteux.

**9** - Procédé selon la revendication 8,
caractérisé en ce que ledit liant caoutchouteux est un latex de néoprène.

**10** - Procédé selon l'une quelconque des revendications 8 ou 9, pour la réalisation d'un mandrin destiné à la mise en oeuvre d'un procédé de l'agencement de fibres selon lequel on introduit à travers des nappes de fibres un fil reposant sur le mandrin continu formant des boucles successives ouvertes, au moyen d'un organe rigide mobile tel qu'une aiguille,
caractérisé en ce que l'épaisseur de la couche superficielle du mandrin imprégnée par le liant caoutchouteux est au moins égale à la profondeur de pénétration de ladite aiguille.

**11** - Procédé selon l'une quelconque des revendications 8 à 10,
caractérisé en ce que l'usinage du bloc de feutre à la forme définitive du mandrin est réalisé après l'imprégnation dudit bloc par ledit liant caoutchouteux.

**12** - Mandrin destiné à la fabrication d'un corps creux en matériau composite, selon un procédé de fabrication dans lequel on applique sur ledit mandrin un agencement de fibres, puis on durcit et on densifie ledit agencement de fibres par des opérations nécessitant l'application de températures élevées, après quoi on dégage dudit mandrin le corps creux formé par ledit agencement de fibres, durci et densifié, ledit mandrin comportant du feutre de graphite rigidifié et usiné de façon à ce que sa surface extérieure corresponde à la surface intérieure dudit corps creux,
caractérisé en ce qu'il est constitué d'un bloc homogène de feutre de graphite dont les fibres sont noyées dans une matrice de carbone de pyrolyse.

**13** - Mandrin selon la revendication 12,
caractérisé en ce qu'au moins sa couche superficielle est imprégnée par un liant caoutchouteux.

**14** - Procédé pour la fabrication d'un corps creux en matériau composite, selon lequel :
   – on commence par réaliser un mandrin à l'aide d'un feutre de graphite, que l'on rigidifie et que l'on usine de façon à ce que sa surface extérieure corresponde à la surface intérieure dudit corps creux ;
   – puis, on applique sur ledit mandrin un agencement de fibres qui est durci et densifié par des opérations nécessitant des températures élevées ;
   – après quoi, on dégage dudit mandrin le corps creux formé par ledit agencement de fibres, durci et densifié ;
   caractérisé :
   – en ce que, pour obtenir ledit mandrin, on rigidifie un bloc de feutre de graphite par imprégnation par un produit polymérisable générateur de carbone, puis on soumet ledit bloc de feutre de graphite à une température élevée sous atmosphère neutre afin de pyrolyser ledit produit polymérisable, après quoi on usine ledit bloc rigidifié à la forme désirée pour le mandrin ;
   – et en ce que la densification dudit agencement de fibres est effectué sous atmosphère neutre.

**15** - Procédé selon la revendication 14,
caractérisé en ce que les fibres dudit agencement sont en carbone et présentent une grande résistance à la rupture lorsqu'elles sont appliquées sur le mandrin et en ce qu'au moins un traitement de graphitation à au moins 2600°C sous atmosphère neutre est appliqué auxdites fibres supportées par ledit mandrin, après réalisation dudit agencement de fibres sur celui-ci.

16 - Procédé selon la revendication 15, caractérisé en ce qu'une opération de dépôt chimique de carbone en phase vapeur est effectuée après ledit traitant de graphitation.

17 - Procédé selon la revendication 16, caractérisé en ce que, après une première opération de dépôt chimique de carbone en phase vapeur, on procède à une élévation de température à au moins 2400°C sous atmosphère neutre, puis à une seconde opération de dépôt chimique de carbone en phase vapeur.

18 - Procédé selon la revendication 17, caractérisé en ce qu'on alterne plusieurs opérations supplémentaires d'élévation de température à au moins 2400°C et plusieurs opérations de dépôt chimique de carbone en phase vapeur.

Office européen
des brevets

**RAPPORT DE RECHERCHE EUROPEENNE**

Numero de la demande

EP 91 40 1521

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 237 031 (C. CONRADTY NÜRNBERG GmbH & CO., KG) <br> * Revendications 12-15,20; colonne 1, ligne 47 - colonne 2, ligne 3 * <br> --- | 1-18 | C 04 B 35/52 <br> B 29 C 53/82 |
| A | FR-A-2 624 111 (FIBER MATERIALS, INC.) <br> * Revendications 1,7,8,11 * <br> ----- | 1,8-18 | |

**DOMAINES TECHNIQUES RECHERCHES (Int. Cl.5)**

C 04 B 35/00
B 29 C 53/00

Le présent rapport a été établi pour toutes les revendications

| Lieu de la recherche | Date d'achèvement de la recherche | Examinateur |
|---|---|---|
| LA HAYE | 20-09-1991 | HAUCK, H.N. |